# EUROPEAN PATENT APPLICATION

(11) **EP 4 606 459 A1**
(43) Date of publication of application: **27.08.2025**
(21) Application number: 24460010.2
(22) Date of filing: 23.02.2024
(51) Int. Cl.: B01D 53/14, B01D 53/18

(54) **METHOD FOR CARRYING OUT GAS-LIQUID OR GAS-SLURRY OR VAPOR-LIQUID EXCHANGES USING ROTATING PACKED BED DEVICES**

(71) Applicant: Saipem S.p.A., 20138 Milano (IT); Prospin sp. z o.o., 92-318 LOdz (PL); Proceler, Michal Pawlowski, 04-796 Warsaw (PL)
(72) Inventor: Pawlowski, Michal, 92-318 Lódz (PL); Pela, Jerzy, 92-318 Lódz (PL); Zawadzki, Dawid, 92-318 Lódz (PL); Górak, Andrzej, 92-318 Lódz (PL)
(74) Representative: Croce, Valeria

(57) **Abstract**

The present invention discloses a method for improving the gas-liquid or gas-slurry or vapor-liquid exchanges using Rotating Packed Bed devices and applications thereof.

## Description

Rotating Packed Bed devices are commonly used in processes for the exchange between liquids and gases.

Some processes are very sensitive to pressure drop.

Too high gas pressure drop on Rotating Packed Bed absorbers battery must be overcome by gas.

These phenomena increase the costs of the process performing or pressure sensitive process with existing installation, for example fluidization or granulation processes.

Installation of additional devices for the CO₂ capture can disturb existing process by requiring the change of the process condition, i.e. pressure inside the main apparatus.

Rotating Packed Bed devices are already known for use in processes for the capture of CO₂ from a CO₂-rich gas.

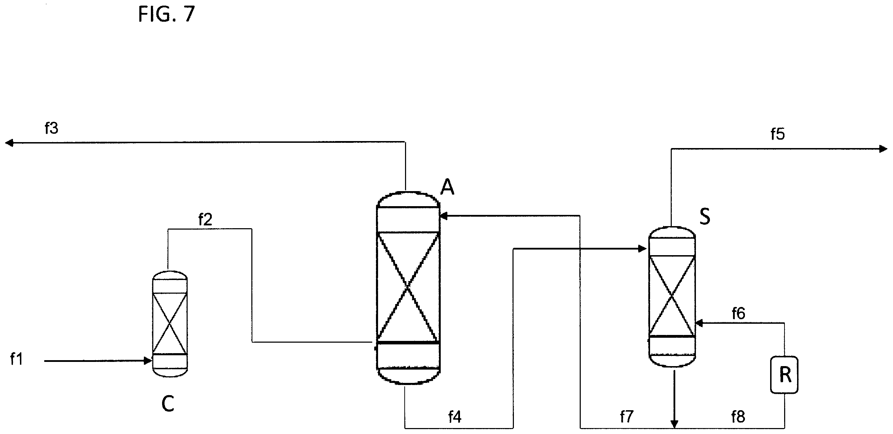

A prior-art process for the absorption of CO₂ from a CO₂-rich gas is schematically shown in Figure 7.

In particular, a CO₂-rich gas f1 is firstly cooled in a cooling section C and then is sent to an absorption unit A where the cooled CO₂-rich gas f2 is contacted with a flow of lean solvent f7, flowing counter-currently inside the packing.

The treated gas f3 exits the absorber A and it is released without further treatment as a CO₂-lean gas, while the CO₂-rich solvent f4 containing the absorbed CO₂ is collected at the bottom.

In the stripping section S, a flow of CO₂ f5 is released from the CO₂-rich solvent f4, which flows counter-currently in the structured packing of a stripping section S against the vapour stream f6 rising from the reboiler R.

The CO₂ is desorbed from the CO₂-rich solvent f4 by increasing the solvent temperature and lowering the CO₂ partial pressure.

The obtained CO₂-lean solvent f7 is sent back from the stripping S to the absorber A, while a portion of the CO₂-lean solvent f8 is heated by a reboiler R and send back to the stripping unit S.

### Summary of the invention

The inventors of the present patent application have surprisingly found that a combination of co-current and counter-current Rotating Packing Bed devices configurations can generate zero or negative pressure drop.

### Brief description of the figures

Figure 1 shows a Rotating Packed Bed according to the prior-art.
Figure 2 shows a co-current Rotating Packed Bed according to the prior-art that is a part of the method of the invention.
Figure 3 shows a counter-current Rotating Packed Bed according to the prior-art that is a part of the method of the invention.
Figure 4 shows a battery of two Rotating Packed Beds operating according to the main embodiment of the present invention.
Figure 5 shows a battery of two Rotating Packed Beds operating according to an alternative embodiment of the present invention.
Figure 6 shows different configurations of batteries of two Rotating Packed Beds according to the present invention.
Figure 7 shows a prior-art process for the absorption of CO₂ from a CO₂-rich gas.
Figure 8 shows a process for the absorption of CO₂ from a CO₂-rich gas according to the present invention.

### Object of the invention

In a first object, the present invention discloses a method for gas-liquid or gas-slurry or vapor-liquid exchanges using Rotating Packed Bed devices.

A battery comprising two Rotating Packed Bed devices for the gas-liquid or gas-slurry or vapor-liquid exchanges and a system comprising at least two batteries of said Rotating Packed Bed devices represents another object of the present invention.

In a second object, the present invention discloses a process for the capture of CO₂ from a CO₂-rich gas.

### Detailed description of the invention

According to the first object, the present invention discloses a method for the gas-liquid or gas-slurry or vapor-liquid exchanges.

For the purposes of the present invention, the method comprises the use of a Rotating Packed Bed device (RPB).

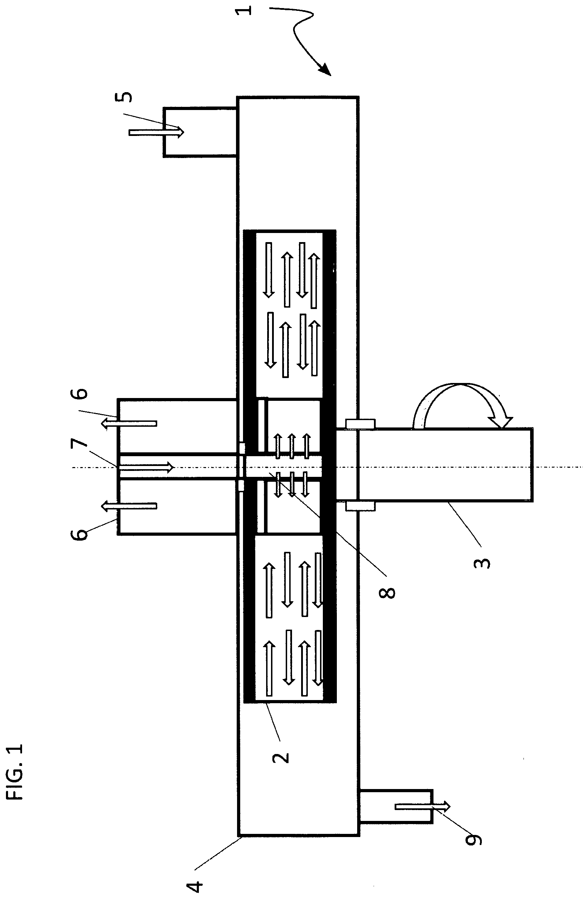

A prior-art RPB that can be used in the method of the present invention is schematically represented in Figure 1.

Figure 1 schematically represents a prior-art RPB 1 (for instance known from US 4.283.255), comprising a stationary vessel 4 and a rotor 2.

The stationary vessel 4 comprises a first inlet port 5 connected to a first inlet pipe assembly (not shown in the figure) for introducing a first inlet flow into the stationary vessel 4, which exits as the first outlet flow through the first outlet port 6 connected to a first outlet pipe assembly (not shown in the figure).

The rotor 2 comprises a second inlet port 7 connected to a liquid distributor 8 connected with the interior of the rotor 2 through respective apertures (not shown in the figure) for introducing a second inlet flow into the rotor 2, which is released as the second outlet flow through the second outlet port 9 connected to the second outlet pipe assembly (not shown in the figure).

Within the stationary vessel 4 is housed a rotor 2 connected to a shaft 3 connected to a motor (not shown) for rotation around its longitudinal axis.

The rotor 2 comprises a packed bed.

According to the known processes, the gas-liquid or gas-slurry or vapor-liquid exchanges occurs through a counter-current exchange.

According to the present invention, there is disclosed a method for the gas-liquid or gas-slurry or vapour-liquid exchange comprising the step of contacting a first inlet flow with a second inlet flow and obtaining a first outlet flow and a second outlet flow, wherein said exchange between the first inlet flow and the second inlet flow occurs through a co-current exchange.

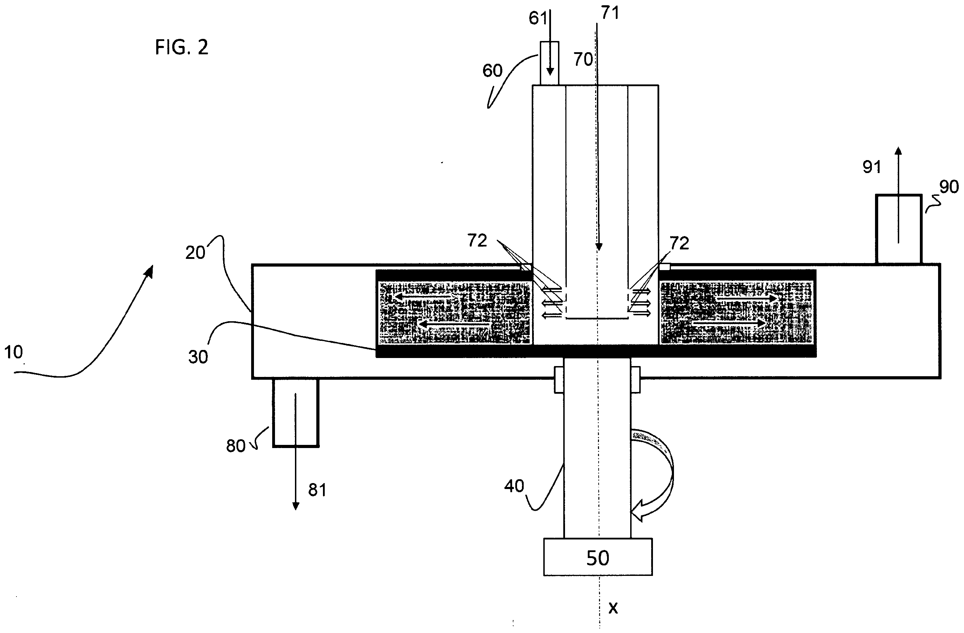

A Rotating Packed Bed according to the present invention is schematically represented in Figure 2.

In particular, the Rotating Packed Bed 10 comprises a stationary vessel 20 housing a rotor 30.

The rotor 30 is mechanically coupled to a shaft 40 connected to a motor 50 for rotation around the longitudinal axis x.

Within the rotor 30 is housed a packed bed (in grey in the figures), responsible for increasing the mass transfer.

A first inlet port 60 connected to a first inlet pipe assembly (not shown in the figure) introduces into the rotor 30 a first inlet flow 61, which is released as the first outlet flow 91 from the stationary vessel 20 through the first outlet port 90 connected to a first outlet pipe assembly (not shown in the figures), wherein said first outlet port 90 is in fluidic connection with the rotor 30.

The RPB 10 also comprises a second inlet port 70 for introducing a second inlet flow 71 into the rotor 30, which is released as the second outlet flow 81 from the stationary vessel 20 through a second outlet port 80 connected to a second outlet pipe assembly (not shown in the figure), wherein said second outlet port 80 is in fluidic connection with the rotor 30.

In particular, the liquid distributor is coupled to the rotor 30 and is in fluidic connection with the rotor 30 through apertures of the liquid distributor 72.

In operation, the first inlet flow 61 is introduced within the rotor 30 and is forced radially outward through the rotor 30 and exits the stationary vessel 20 as the first outlet flow 91, while the second inlet flow 71 is introduced into the rotor 30 and is forced radially outward through the apertures of the liquid distributor 72 and exits the stationary vessel 20 as the second outlet flow 81.

For the purposes of the present invention, a gas-liquid or a gas-slurry or a vapor-liquid exchange occurs between the first inlet flow 61 and the second inlet flow 71.

In particular, the exchange between the first inlet flow 61 and the second inlet flow 71 occurs through a co-current exchange.

According to a first embodiment of the present invention, the gas-liquid or gas-slurry or vapor-liquid exchanges is performed using a battery of at least a first Rotating Packed Bed (RPB1) and a second Rotating Packed Bed (RPB2) fluidically connected in series, wherein:
- in the first Rotating Packed Bed (RPB1) the exchange occurs co-currently, and
- in the second Rotating Packed Bed (RPB2) the exchange occurs counter-currently.

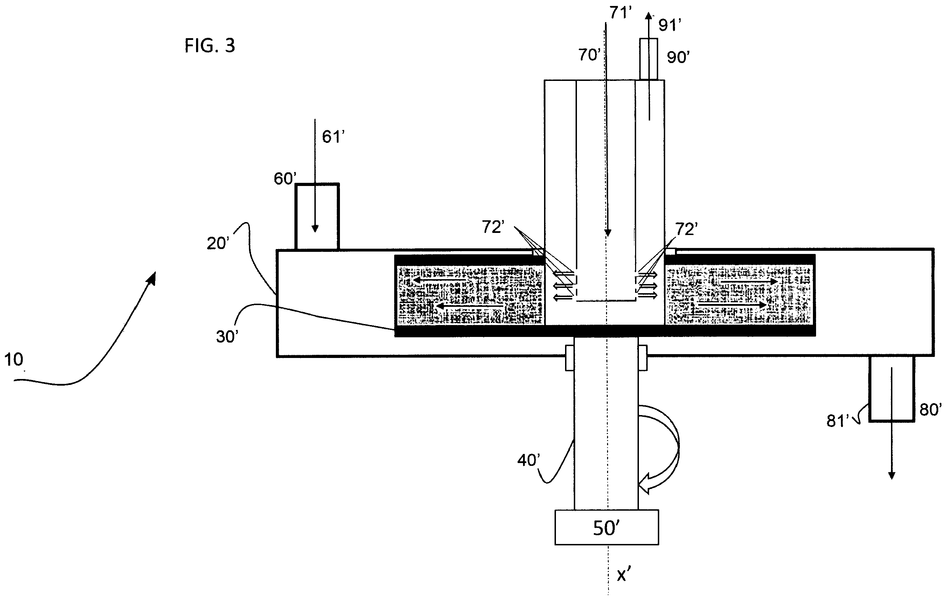

A Rotating Packed Bed operating a counter-current exchange is shown in Figure 3.

In particular, the second Rotating Packed Bed 10', which operates counter-currently, comprises a further stationary vessel 20' housing a further rotor 30'.

The further rotor 30' is mechanically coupled to a further shaft 40' connected to a further motor 50' for rotation around a further longitudinal axis x'.

Within the further rotor 30' is housed a further packed bed (in grey in the figures), responsible for increasing the mass transfer.

The further stationary vessel 20' comprises a further first inlet port 60' connected to a further first inlet pipe assembly (not shown in the figure) for introducing a further first inlet flow 61' into the further stationary vessel 20', which is released as the further first outlet flow 91' through the further first outlet port 90' connected to a further first outlet pipe assembly (not shown in the figures), wherein said further first outlet port 91' is in fluidic connection with the further rotor 30'.

The second Rotating Packed Bed 10' also comprises a further second inlet port 70' for introducing a further second inlet flow 71' into the further rotor 30', which is released as the further second outlet flow 81' from the further stationary vessel 20' through a further second outlet port 80' connected to a further second outlet pipe assembly (not shown in the figures), wherein said further second outlet port 80' is in fluidic connection with the further rotor 30'.

In particular, the further liquid distributor is coupled to the further rotor 30' and is in fluidic connection with the further rotor 30' through apertures 72'of the further liquid distributor.

In operation, the further first inlet flow 61' is introduced within the further stationary vessel 20' and is forced radially inward and exits the further rotor 30' as the further first outlet flow 91'; while the further second inlet flow 71' is introduced into the further rotor 30' and is forced radially outward through the apertures 72' of the further liquid distributor and exits the further stationary vessel 20' as the second further outlet flow 81'.

Accordingly, a gas-liquid or a gas-slurry or a vapor-liquid exchange occurs between the first inlet flow 61' and the second inlet flow 71'.

In particular, the exchange between the first inlet flow 61' and the second inlet flow 71' occurs through a counter-current exchange.

According to the present invention there is disclosed a method for carrying out gas-liquid or gas-slurry or vapor-liquid exchanges using a battery of two Rotating Packed Bed devices fluidically connected in series, wherein a co-current exchange occurs in the first Rotating Packed Bed (RPB1), and a counter-current exchange occurs in the second Rotating Packed Bed (RPB2).

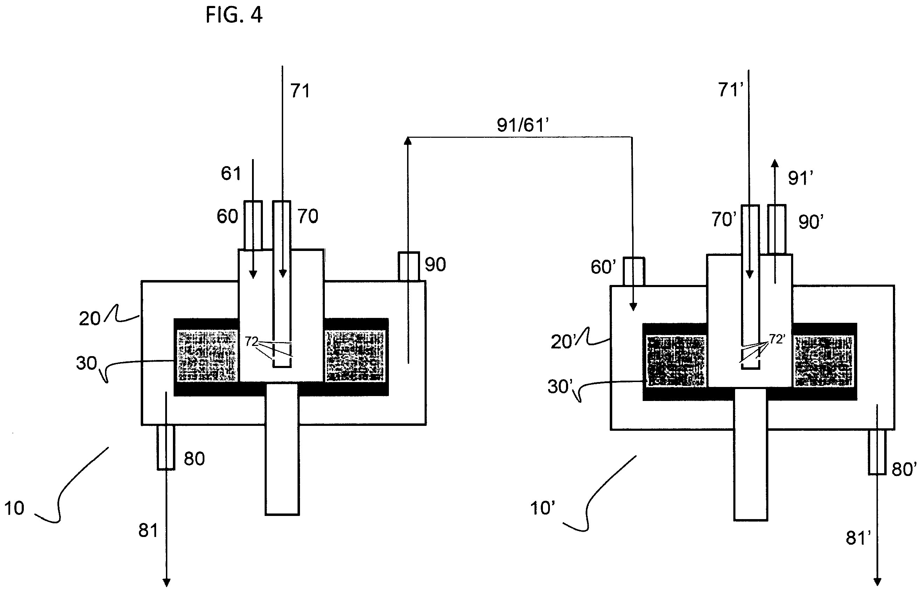

A method according to the invention, is schematically represented in Figure 4.

According to said embodiment, the method is performed with the use of a first Rotating Packed Bed 10 (RPB1) fluidically connected to a second Rotating Packed Bed 10' (RPB2), wherein the first Rotating Packed Bed 10 (RPB1) operates a co-current exchange between the first inlet flow 61 and the second inlet flow 71 and the second Rotating Packed Bed 10' operates a counter-current exchange between the further first inlet flow 61' and the further second inlet flow 71' .

As shown in Figure 4, in operation, in the first RPB 10 (RPB1), the first inlet flow 61 is introduced within the rotor 30 and is forced radially outward through the rotor 30 and exits the stationary vessel 20 as the first outlet flow 91, while the second inlet flow 71 is introduced within the rotor 30 and is forced radially outward through the rotor 30 and exits the stationary vessel 20 as the second outlet flow 81.

Between the first inlet flow 61 and the second inlet flow 71 occurs a co-current exchange.

According to the disclosed embodiment of the invention, the first outlet flow 91 is sent to the second Rotating Packed Bed 10' (RPB2) as the further first inlet flow 61'.

In operation, in the second RPB 10', the further first inlet flow 61' is introduced within the further stationary vessel 20' and is forced radially inward and exits the further rotor 30' as the further first outlet flow 91', while the further second inlet flow 71' is introduced within the further rotor 30' and is forced radially outward through the apertures 72' of the further liquid distributor and exits the further stationary vessel 20' as the further second outlet flow 81'.

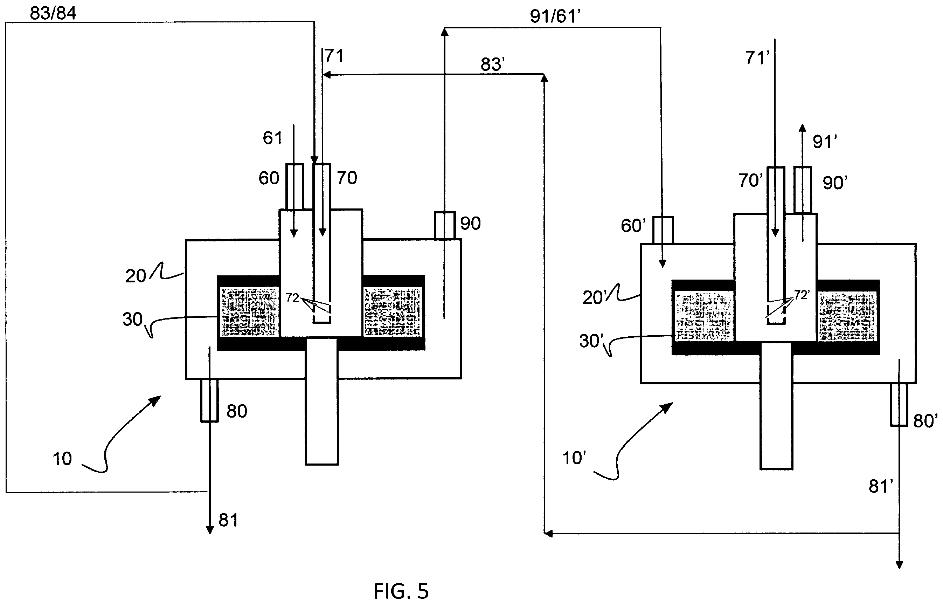

According to the present invention, an alternative embodiment of the method of Figure 4 is schematically represented in Figure 5.

In particular, according to said embodiment, in the first Rotating Packed Bed (RPB1) 10 at least a portion of the second outlet flow 83 is recirculated to the same first Rotating Packed Bed 10 (RPB1).

In particular, said portion of the second outlet flow 83 is introduced into the rotor 30 of the first RPB (RPB1) 10 through the second inlet port 70 as a third inlet flow 84.

Said recirculation can be in addition to the second inlet flow 71.

According to the present invention, as an alternative to or in addition to the above embodiment, in the second RPB (RPB2) 10', at least a portion of the further second outlet flow 83' from the second Rotating Packed Bed (RPB2) 10' is recirculated to the first Rotating Packed Bed (RPB1) 10.

In particular, said portion of the further second outlet flow 83' is introduced into the rotor 30 of the first Rotating Packed Bed (RPB1) 10 as the second inlet flow 71 of the first Rotating Packed Bed (RPB1) 10.

Said recirculation can be in addition to the first inlet flow 71 and/or to the third inlet flow 84.

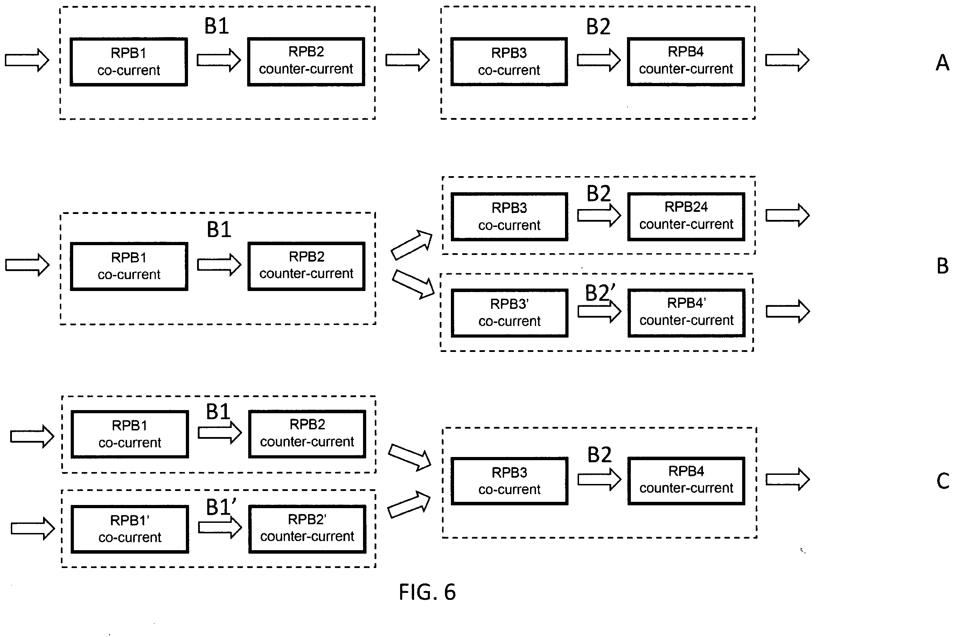

Figure 6 shows some of the possible configurations of systems of Rotating Packed Bed devices B1,B1',B2,B2' fluidically connected according to embodiments of the present invention.

Figure 6A shows the (CO-CC)2 configuration comprising two batteries of RPB devices, wherein:
- a first battery B1 comprises a first Rotating Packed Bed (RPB1) operating a co-current (CO) exchange and a second Rotating Packed Bed (RPB2) operating a counter-current (CC) exchange; connected fluidically to
- a second battery B2 comprising a third Rotating Packed Bed (RPB3) operating a co-current (CO) exchange and a fourth Rotating Packed Bed (RPB4) operating a counter-current (CC) exchange.

Figure 6B shows the (CO-CC)-[(CO-CC)]2 configuration comprising three batteries of RPB devices, wherein:
- a first battery B1 comprises a first Rotating Packed Bed (RPB1) operating a co-current (CO) exchange and a second Rotating Packed Bed (RPB2) operating a counter-current (CC) exchange; connected fluidically to
- a second battery B2 comprising a third Rotating Packed Bed (RPB3) operating a co-current (CO) exchange and a fourth Rotating Packed Bed (RPB4) operating a counter-current (CC) exchange,
the first battery B1 being also connected fluidically to:
- a further second battery B2' comprising a further third Rotating Packed Bed (RPB3') operating a co-current (CO) exchange and a further fourth Rotating Packed Bed (RPB4') operating a counter-current (CC) exchange.

Figure 6C shows the [(CO-CC)]2-(CO-CC) configuration comprising three batteries of RPBs, wherein:
- a first battery B1 comprises a first Rotating Packed Bed (RPB1) operating a co-current (CO) exchange and a second Rotating Packed Bed (RPB2) operating a counter-current (CC) exchange;
- a further first battery B1' comprises a further first Rotating Packed Bed (RPB1') operating a co-current (CO) exchange and a further second Rotating Packed Bed (RPB2') operating a counter-current (CC) exchange;
both the first and the further first batteries being fluidically connected to:
- a second battery B2 comprising a third Rotating Packed Bed (RPB3) operating a co-current (CO) exchange and a fourth Rotating Packed Bed (RPB4) operating a counter-current (CC) exchange.

According to a particular embodiment of the present invention, the RPB is disclosed in order to improve the gas-liquid or vapor-liquid or gas-slurry exchanges.

According to a particular embodiment of the present invention, the Rotating Packed Bed is disclosed in order to reduce the pressure drop in the RPB battery.

In particular, according to a preferred embodiment, the first inlet flow is represented by a gas and the second inlet flow is represented by a liquid.

According to a more preferred embodiment of the present invention, the first inlet flow is represented by a COz-loaded gas and the second inlet flow is represented by a lean solvent for the capture of CO₂.

Suitable solvents may be for instance selected from the group comprising: amine solvent, potassium carbonate-based solvents.

According to an embodiment of the invention, the CO₂-loaded gas is represented by a flue gas, for instance from a Battery Limit (BL), combustion gases, pre-combustion gases.

According to the second object of the present invention, there is disclosed a process comprising the method for the gas-liquid or gas-slurry or vapor-liquid exchanges using Rotating Packed Bed devices above disclosed.

According to a particular embodiment of the present invention, the process enhances the exchange between a gas and a liquid.

In particular, according to a preferred embodiment, the first inlet flow is represented by a gas and the second inlet flow is represented by a liquid.

According to a more preferred embodiment of the present invention, the first inlet flow is represented by a COz-loaded gas and the second inlet flow is represented by a lean-solvent for the capture of CO₂.

The application related to a process of carbon capture from flue-gas with a potassium carbonate solvent, enhanced with an enzyme, where the RPB is used in the absorption section.

According to an embodiment of the invention, the CO₂-loaded gas is represented by a flue gas, for instance from a Battery Limit (BL), combustion gases, pre-combustion gases.

Suitable solvents may be for instance selected from the group comprising: potassium carbonate-based solvents, amine-based solvents.

In a particular, in the process of the present invention for the absorption of CO₂ from a CO₂-loaded gas there is used a lean solvent comprising a biocatalyst.

In a particular embodiment, in the process of the present invention for the absorption of CO₂ from a CO₂₋loaded gas there is used a biocatalyst represented by carbonic anhydrase.

According to the above, the present invention discloses a process for the absorption of CO₂ from a CO₂-loaded gas comprising the method above disclosed.

According to the present invention, the process comprises the steps of contacting a CO₂-loaded gas with an absorption solution represented by lean solvent, thereby obtaining a CO₂-deloaded gas and a CO₂-rich solvent.

For the purposes of the present invention, the contacting step, which is an exchange step, is performed in an Absorbing Unit A comprising a battery of at least two Rotating Packed Beds (RPB1,RPB2) fluidically connected in series, wherein:
- the first Rotating Packed Bed RPB1 operates a co-current (CO) exchange and
- the second Rotating Packed Bed RPB2 operates a counter-current (CC) exchange.

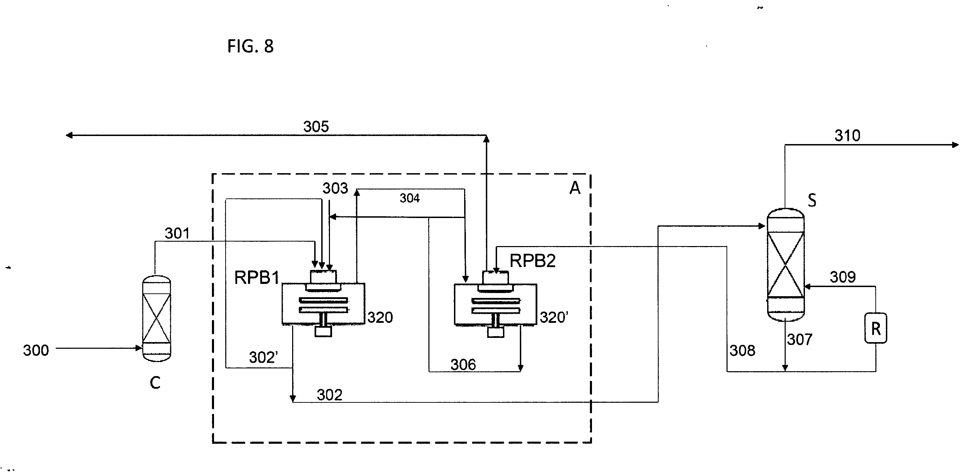

Figure 8 discloses the main steps of a process for the capture of CO₂ from a CO₂-loaded gas according to the present invention, wherein the absorption unit A comprises a battery of at least two Rotating Packed Beds (RPB1,RPB2) as above disclosed.

In particular, a CO₂-loaded gas 300 is firstly cooled in a cooling section C obtaining a cooled CO₂-loaded gas 301, which is sent to an absorption unit A, wherein the CO₂ is absorbed and there are obtained a CO₂-deloaded gas 305 and a CO₂-rich solvent 302.

Said CO₂-rich solvent 302 can be sent to a stripping unit S thereby obtaining a CO₂ flow 310.

From the flow exiting the Stripping Unit 307 there are obtained a regenerated lean-solvent flow 308 sent to the second Rotating Packed Bed (RPB2) of the Absorbing Section A and a recycled portion 309, which is heated in a reboiler R and sent to the Stripping Unit S.

More in particular, according to an embodiment of the invention, the cooled CO₂-loaded gas 301 is sent to the first Rotating Packed Bed 320 (RPB1) of the Absorbing Unit A; exchanging co-currently with a flow of lean solvent 303 there are obtained a partially CO₂-deloaded flow 304 and a CO₂-rich solvent 302.

The partially CO₂-deloaded gas flow 304 is sent to the second Rotating Packed Bed 320', wherein a counter-current exchange occurs from which there are obtained the CO₂-deloaded gas 305 and a partially CO₂-rich solvent 306, which can be recirculated to the first Rotating Packed Bed 320.

As an alternative or in addition to the embodiment above disclosed, a portion of the CO₂-loaded solvent 302' obtained from the first Rotating Packed Bed (RPB1) 320 can be at least partially recirculated back to the same first Rotating Packed Bed (RPB1) 320.

For the purposes of the present invention, a process for the capture of CO₂ may also include a stripping unit S, which is represented by a Rotating Packed Bed (RPB).

According to a particular embodiment of the present invention, said stripping unit S may be represented by a battery of two or more Rotating Packed Beds (RPBs).

Said battery of two or more Rotating Packed Beds (RPBs) may have one of the configurations above disclosed with reference to Figure 6.

A method according to the invention has been tested as below disclosed.

Two RPB devices, both diameter 600 mm and packing height 10 mm, equipped in knitted mesh with gas flow 20 m³/h. The first device works in co-current and the second in counter-current configuration. The rotational speed of the second device is 1200 rpm and the device generates 800 Pa pressure drop, which can be divided into 150 Pa static and 650 Pa rotational pressure drop. According to the model, the rotational speed of the first RPB device must be 1400 rpm to overcome the static pressure drop (150 Pa) from the first RPB device and the pressure drop (800 Pa) from second RPB device.

Therefore, the present invention discloses:
- A method for the gas-liquid or gas-slurry or vapor-liquid exchanges using a battery (B1,B1',B2,B2') comprising a first Rotating Packed Bed device (RPB1) (10) fluidically connected to a second Rotating Packed Bed device (RPB2) (10'), wherein in said first Rotating Packed Bed device (RPB1) (10) it is carried out a co-current exchange and wherein in said second Rotating Packed Bed (RPB2) (10') it is carried out a counter-current exchange.
- A method of the invention for the gas-liquid or gas-slurry or vapor-liquid exchanges comprising a first Rotating Packed Bed device (RPB1) (10) fluidically connected to a second Rotating Packed Bed device (RPB2) (10'), wherein in said first Rotating Packed Bed device (RPB1) (10) there are introduced a first inlet flow (61) and a second inlet flow (71) carrying a co-current exchange therebetween obtaining a first outlet flow (91) and a second outlet flow (81,) and wherein in said second Rotating Packed Bed (RPB2) (10') there are introduced a further first inlet flow (61') and a further second inlet flow (71') carrying a counter-current exchange therebetween obtaining a further first outlet flow (91') and a further second outlet flow (81'), wherein said further first inlet flow (61') is represented by said first outlet flow (91).
- The method of the invention for the gas-liquid or gas-slurry or vapor-liquid exchanges, wherein said first Rotating Packed Bed device (RPB1) (10) comprises a stationary vessel (20) housing a rotor (30) mechanically coupled to a shaft (40) connected to a motor (50) for rotation around a longitudinal axis x, said rotor (30) housing a packed bed, wherein said first inlet flow (61) is introduced into the rotor (30) and is released from the stationary vessel (20) as the first outlet flow (91), and the second inlet flow (71) is introduced into the rotor (30) and is released from the stationary vessel (20) as the second outlet flow (81), and wherein said second Rotating Packed Bed (RPB2) (10') comprises a further stationary vessel (20') housing a further rotor (30') mechanically coupled to a further shaft (40') connected to a further motor (50') for rotation around the further longitudinal axis x', said further rotor (30') housing a further packed bed, wherein said further first inlet flow (61') is introduced into the further stationary vessel (20') and is released as the further first outlet flow (91') and the further second inlet flow (71') is introduced into said further rotor (30') and is released as the further second outlet flow (81') from the further stationary vessel (20').

- The method according of the invention for gas-liquid or gas-slurry or vapor-liquid, wherein at least a portion (83') of the further second outlet flow is recirculated to the first Rotating Packed Bed (RPB1) (10) as a third inlet flow.
- The method of the invention for gas-liquid or gas-slurry or vapor-liquid exchanges, wherein a portion (83') of the further second outlet flow from the second Rotating Packed Bed (RPB2) (10') is recirculated to the first Rotating Packed Bed (RPB1) (10) as the second inlet flow (71) of the first Rotating Packed Bed (RPB1) (10).
- The method of the invention for gas-liquid or gas-slurry or vapor-liquid exchanges, which comprises the use of two or more batteries of Rotating Packed Bed devices (B1,B1',B2,B2'), wherein each one of said batteries (B1,B1',B2,B2') comprises a first Rotating Packed Bed device (RPB1) (10) fluidically connected to a second Rotating Packed Bed device (RPB2) (10'), wherein in said first Rotating Packed Bed device (RPB1) (10) it is carried out a co-current exchange and in said second Rotating Packed Bed device (RPB2) (10') it is carried out a counter-current exchange.

- The method of the invention for gas-liquid or gas-slurry or vapor-liquid exchanges, wherein each of said two or more batteries of Rotating Packed Bed devices (B1,B1',B2,B2') are fluidically connected between them in parallel and/or in series.
- A process for the capture of CO₂ from a CO₂-rich gas comprising the method of the invention, wherein said first inlet flow (61,61') is represented by a CO₂-loaded gas (300) and the second inlet flow (71,71') is represented by a lean solvent (303) for the capture of CO₂.
- The process of the invention for the capture of CO₂ from a CO₂-rich gas, wherein said lean solvent (303) for the capture of CO₂ comprises a carbonic anhydrase.
- A process of the invention for the capture of CO₂ from a CO₂-rich gas, wherein a cooled CO₂-loaded gas (301) is sent to the first Rotating Packed Bed device (RPB1) (320), wherein a co-current exchange occurs with a flow of a lean solvent (303) obtaining a partially CO₂-deloaded flow (304), wherein said partially CO₂-deloaded gas flow (304) is sent to the second Rotating Packed Bed device (RPB2) (320') wherein a counter-current exchange occurs obtaining a CO₂-deloaded gas (305) and a partially CO₂-rich solvent (306).
- The process of the invention for the capture of CO₂ from a CO₂-rich gas, wherein a flow of CO₂-rich solvent (302) is obtained from said first Rotating Packed Bed device (RPB1) (320) and a portion of said CO₂-rich solvent (302') is recirculated to the first Rotating Packed Bed device (RPB1) (320).
- The process of the invention for the capture of CO₂ from a CO₂-rich gas, wherein said partially CO₂-rich solvent (306) is recirculated to the first Rotating Packed Bed device (RPB1) (320).
- The process of the invention for the capture of CO₂ from a CO₂-rich gas, wherein said CO₂-rich solvent (302) is sent to a stripping Unit S obtaining a CO₂ flow (310) and a flow exiting the Stripping Unit (307.
- The process of the invention for the capture of CO₂ from a CO₂-rich gas, wherein from the flow exiting the Stripping Unit (307) there are obtained a regenerated lean-solvent flow (308) sent to the second Rotating Packed Bed (RPB2) (320') of the Absorbing Section A and a recycled portion (309), which is heated in a reboiler R and sent to the Stripping Unit S.
- A battery (B1,B1',B2,B2') comprising two Rotating Packed Bed devices (RPB1,RPB2) for the gas-liquid or gas-slurry or vapor-liquid exchanges, said battery comprising (B1,B1',B2,B2') a first Rotating Packed Bed device (RPB1) (10) fluidically connected to a second Rotating Packed Bed device (RPB2) (10'), wherein said first Rotating Packed Bed device (RPB1) (10) carries out a co-current exchange and wherein said second Rotating Packed Bed (RPB2) (10') carries out a counter-current exchange.
- The battery (B1,B1',B2,B2') of the invention comprising two Rotating Packed Bed devices (RPB1,RPB2) for the gas-liquid or gas-slurry or vapor-liquid exchanges, wherein in said first Rotating Packed Bed device (RPB1)(10) there are introduced a first inlet flow (61) and a second inlet flow (71) carrying a co-current exchange therebetween obtaining a first outlet flow (91) and a second outlet flow (81,) and wherein in said second Rotating Packed Bed (RPB2) (10') there are introduced a further first inlet flow (61') and a further second inlet flow (71) carrying a counter-current exchange therebetween obtaining a further first outlet flow (91') and a further second outlet flow (81'), wherein said further first inlet flow (61') is represented by said first outlet flow (91).
- A system comprising at least two batteries (B1,B1',B2,B2') comprising two Rotating Packed Bed devices (RPB1,RPB2) of the invention, wherein said at least two batteries (B1,B1',B2,B2') are fluidically connected therebetween.

The present invention offers several advantages compared to the prior-art.

As above discloses, there is avoided the pressure drop known in the processes using Rotating Packed Beds in absorbing batteries.

As a consequence, the overall efficiency of the process is increased and the operating costs (COPEX) can be reduced.

## Claims

1. A method for the gas-liquid or gas-slurry or vapor-liquid exchanges using a battery (B1,B1',B2,B2') comprising a first Rotating Packed Bed device (RPB1) (10) fluidically connected to a second Rotating Packed Bed device (RPB2) (10'), wherein in said first Rotating Packed Bed device (RPB1) (10) it is carried out a co-current exchange and wherein in said second Rotating Packed Bed (RPB2) (10') it is carried out a counter-current exchange.

2. A method according to the preceding claim for the gas-liquid or gas-slurry or vapor-liquid exchanges comprising a first Rotating Packed Bed device (RPB1) (10) fluidically connected to a second Rotating Packed Bed device (RPB2) (10'), wherein in said first Rotating Packed Bed device (RPB1) (10) there are introduced a first inlet flow (61) and a second inlet flow (71) carrying a co-current exchange therebetween obtaining a first outlet flow (91) and a second outlet flow (81,) and wherein in said second Rotating Packed Bed (RPB2)(10') there are introduced a further first inlet flow (61') and a further second inlet flow (71') carrying a counter-current exchange therebetween obtaining a further first outlet flow (91') and a further second outlet flow (81'), wherein said further first inlet flow (61') is represented by said first outlet flow (91).

3. The method according to the preceding claim 1 or 2 for the gas-liquid or gas-slurry or vapor-liquid exchanges, wherein said first Rotating Packed Bed device (RPB1) (10) comprises a stationary vessel (20) housing a rotor (30) mechanically coupled to a shaft (40) connected to a motor (50) for rotation around a longitudinal axis x, said rotor (30) housing a packed bed, wherein said first inlet flow (61) is introduced into the rotor (30) and is released from the stationary vessel (20) as the first outlet flow (91), and the second inlet flow (71) is introduced into the rotor (30) and is released from the stationary vessel (20) as the second outlet flow (81), and wherein said second Rotating Packed Bed (RPB2) (10') comprises a further stationary vessel (20') housing a further rotor (30') mechanically coupled to a further shaft (40') connected to a further motor (50') for rotation around the further longitudinal axis x', said further rotor (30') housing a further packed bed, wherein said further first inlet flow (61') is introduced into the further stationary vessel (20') and is released as the further first outlet flow (91') and the further second inlet flow (71') is introduced into said further rotor (30') and is released as the further second outlet flow (81') from the further stationary vessel (20').

4. The method according to any one of the preceding claims for gas-liquid or gas-slurry or vapor-liquid, wherein at least a portion (83') of the further second outlet flow is recirculated to the first Rotating Packed Bed (RPB1) (10) as a third inlet flow.

5. The method according to any one of the preceding claims for gas-liquid or gas-slurry or vapor-liquid exchanges, wherein a portion (83') of the further second outlet flow from the second Rotating Packed Bed (RPB2) (10') is recirculated to the first Rotating Packed Bed (RPB1) (10) as the second inlet flow (71) of the first Rotating Packed Bed (RPB1) (10).

6. The method according to any one of the preceding claims for gas-liquid or gas-slurry or vapor-liquid exchanges, which comprises the use of two or more batteries of Rotating Packed Bed devices (B1,B1',B2,B2'), wherein each one of said batteries (B1,B1',B2,B2') comprises a first Rotating Packed Bed device (RPB1) (10) fluidically connected to a second Rotating Packed Bed device (RPB2) (10'), wherein in said first Rotating Packed Bed device (RPB1) (10) it is carried out a co-current exchange and in said second Rotating Packed Bed device (RPB2) (10') it is carried out a counter-current exchange.

7. The method according to the preceding claim for gas-liquid or gas-slurry or vapor-liquid exchanges, wherein each of said two or more batteries of Rotating Packed Bed devices (B1,B1',B2,B2') are fluidically connected between them in parallel and/or in series.

8. A process for the capture of CO₂ from a CO₂-rich gas comprising the method according to any one of the preceding claims, wherein said first inlet flow (61,61') is represented by a CO₂-loaded gas (300) and the second inlet flow (71,71') is represented by a lean solvent (303) for the capture of CO₂.

9. The process for the capture of CO₂ from a CO₂-rich gas according to the preceding claim, wherein said lean solvent (303) for the capture of CO₂ comprises a carbonic anhydrase.

10. A process for the capture of CO₂ from a CO₂-rich gas according to claim 8 or 9, wherein a cooled CO₂-loaded gas (301) is sent to the first Rotating Packed Bed device (RPB1) (320), wherein a co-current exchange occurs with a flow of a lean solvent (303) obtaining a partially CO₂-deloaded flow (304), wherein said partially CO₂-deloaded gas flow (304) is sent to the second Rotating Packed Bed device (RPB2) (320') wherein a counter-current exchange occurs obtaining a CO₂-deloaded gas (305) and a partially CO₂-rich solvent (306).

11. The process for the capture of CO₂ from a CO₂-rich gas according to the preceding claim 9 or 10, wherein a flow of CO₂-rich solvent (302) is obtained from said first Rotating Packed Bed device (RPB1) (320) and a portion of said COz-rich solvent (302') is recirculated to the first Rotating Packed Bed device (RPB1) (320).

12. The process for the capture of CO₂ from a CO₂-rich gas according to the preceding claim 10 or 11, wherein said partially COz-rich solvent (306) is recirculated to the first Rotating Packed Bed device (RPB1) (320).

13. The process for the capture of CO₂ from a CO₂-rich gas according to any one of the preceding claims 10 to 12, wherein said COz-rich solvent (302) is sent to a stripping Unit S obtaining a CO₂ flow (310) and a flow exiting the Stripping Unit (307.

14. The process for the capture of CO₂ from a CO₂-rich gas according to any one of the preceding claims 10 to 13, wherein from the flow exiting the Stripping Unit (307) there are obtained a regenerated lean-solvent flow (308) sent to the second Rotating' Packed Bed (RPB2) (320') of the Absorbing Section A and a recycled portion (309), which is heated in a reboiler R and sent to the Stripping Unit S.

15. A battery (B1,B1',B2,B2') comprising two Rotating Packed Bed devices (RPB1,RPB2) for the gas-liquid or gas-slurry or vapor-liquid exchanges, said battery comprising (B1,B1',B2,B2') a first Rotating Packed Bed device (RPB1) (10) fluidically connected to a second Rotating Packed Bed device (RPB2) (10'), wherein said first Rotating Packed Bed device (RPB1) (10) carries out a co-current exchange and wherein said second Rotating Packed Bed (RPB2) (10') carries out a counter-current exchange.

16. The battery (B1,B1',B2,B2') comprising two Rotating Packed Bed devices (RPB1,RPB2) for the gas-liquid or gas-slurry or vapor-liquid exchanges according to the preceding claim, wherein in said first Rotating Packed Bed device (RPB1) (10) there are introduced a first inlet flow (61) and a second inlet flow (71) carrying a co-current exchange therebetween obtaining a first outlet flow (91) and a second outlet flow (81,) and wherein in said second Rotating Packed Bed (RPB2) (10') there are introduced a further first inlet flow (61') and a further second inlet flow (71) carrying a counter-current exchange therebetween obtaining a further first outlet flow (91') and a further second outlet flow (81'), wherein said further first inlet flow (61') is represented by said first outlet flow (91).

17. A system comprising at least two batteries (B1,B1',B2,B2') comprising two Rotating Packed Bed devices (RPB1,RPB2) according to claim 15 or 16, wherein said at least two batteries '(B1,B1',B2,B2') are fluidically connected therebetween.
